# EUROPEAN PATENT APPLICATION

(11) **EP 2 135 853 A2**
(43) Date of publication of application: **23.12.2009**
(21) Application number: 09007918.7
(22) Date of filing: 17.06.2009
(51) Int. Cl.: C05D 3/02, C05F 7/00

(54) **Versatile plant for the production of defecation gypsum for agricultural use, and formulations containing the same**

(30) Priority: 19.06.2008 IT MI20081115
(71) Applicant: Technelep S.R.L., 20152 Milano (MI) (IT)
(72) Inventor: Bobbiesi, Giuseppe, 20152 Milano (IT)
(74) Representative: Beneduce, Gianna

(57) **Abstract**

A batch-type or continous, stationary or mobile plant for the preparation of Defecation Gypsum for agricultural use and formulations containing the same, starting from organic solid or liquid materials, of a prevalently protein-based nature, consisting of mixing, handling and handled material storage means, is described.

## Description

### Brief description of the invention

The object of the present invention concerns a discontinuous (batch-type) or continuous, stationary or mobile and highly versatile plant for the production of Defecation Gypsum for agricultural use and of formulations containing the same, starting from solid and liquid organic materials, of a prevalently protein-based nature, which, intimately mixed with each other, are subjected, under controlled conditions, to alkaline hydrolysis by treatment with a calcium chemical selected from calcium oxide and calcium hydroxide and subsequently with sulphuric acid.

Said plant is essentially made of a number of devices, such as for instance mechanical shovels, conveyor belts and screws for raw material handling and premixing the raw materials to get intermediate materials to subsequently undergo two subsequent treatments to get the final product; of a suitable system for fine mixing the materials of the two above mentioned subsequent treatments, which is equipped with appropriate devices (scrubbers) to knock down the dusts and droplets in the formed vapours and fumes caused by the reactions; of adequate storage facilities for the reagents needed for preparing the final Defecation Gypsum and for additives, if any, to be mixed with the same; of a suitable instrumentation, hardware and software, for measuring control and monitoring the operating data, such as flow rates, temperatures etc.; all of them controlled by a PLC or PC with an appropriate software.

The mixing system generally consits of a mixer, but it may, as an alternative, also consist of two mixers working in series or, depending on the plant's production capacity, two or more mixers working in parallel.

### State of the art

The term "Defecation Gypsum" stands generally to mean a byproduct of sugar plants, of the paper industry and of the industry producing hydrolyzed protein-based slaughtering residues and hide tanning plant wastes and therefore, up to this date, the interest for implementing plants for the specific production of Defecation Gypsum was very low. This is also due to the fact that the agronomic requirements this gypsum was considered limited to pH-correction of the soils, it can also remrkable satisfy other agricultural requirements like an organic soil and organic soil improver, optionally in combination with mineral gypsum, limestone, dolomite, Thomas slags, sulphur,etc.

The idea of producing Defecation Gypsum from biological sludges and other suitable organic wastes has only recently arisen in Italy, both to valorize biological sludges and to compensate the reduced availability of a product from the sugar factories due to the shutdown of many of the latter.

The application for an Italian patent no. PC 2005 A000061 describes a plant for the production of a soil conditioner or Defecation Gypsum (bio-sulphate), which pretends to be constituted of an electro-kinetic separator for extracting certain pollutants from bio-masses, such as heavy metals and undesirable anions and of a chemical reactor. In such a plant, some suspicions of a poor reliability are aroused by the low technological level of the equipment employed, and by a declared electrokinetic application unsuitable for the physical properties of the materials, as well as by a total lack of specific technical data.

### Detailed description of the invention

The object of the present invention is constituted of a batch-type or continuous, stationary or mobile and highly versatile plant for the preparation of Defecation Gypsum for agricultural use and formulations containing the same, starting from solid and liquid organic materials of a prevalently protein-based nature and limited heavy metal content. As concerns the parts producing volatile substances release, said plant is implemented inside an enclosed structure and suction devices conveying the final sucked gas already treated in scrubbers to a bio-filter, and, as concerns the activities that are not producing particular emissions, on an impermeable platform under shelter with water collection.

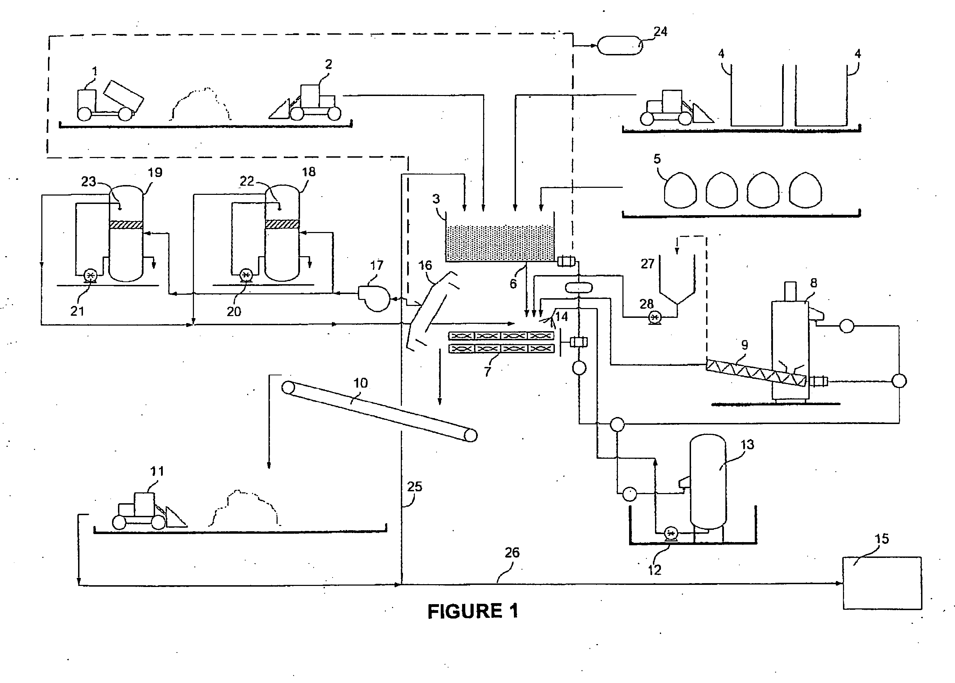

For a better understanding, said plant will be described in detail with reference to an embodiment represented by the plant sketch of Figure 1, which shows the blocks composing it; in the specific case of discontinuous operation, reference is made to the plant alternative made of one mixer only which is operated in two subsequent steps to the operations (reactions).

The raw material, which is essentially constituted of a solid and, in small amount liquid, organic material with a prevalently protein-based component, is conveyed to the plant by a tiltable flatbed truck (1) that unloads it onto an appropriate, dedicated pad paved with an impermeable material and fitted with means for the collection of percolate, if any, (which is generally not present, as the processes employed are usually absorbing water), on which the raw material heap is formed. The same heap can of course be formed by handling to the pad the starting material, which is already available in a storage near to the plant, by preferably using a rubber-tire mechanical shovel (2) fitted with weighing devices and capable of transmitting the operating data to the mentioned PLC or PC. When the process is discontinuous, in a later stage said shovel (2) also loads the heap material into the hopper (3) according to a predetermined operation program. Said hopper (3), being loaded by the shovel (2) or by other similar one, also receives, depending on the capacity of the shovel (2) and of the plant capacity, other materials stored in bulk elsewhere, both in boxes (4) (transport by mechanical shovel) and large size bags (5) (transport by overhead rail), diluent as well as reactant substances in quantities proportional to the organic materials to be treated, whose nature may vary in function of the formulations of the required final product. The hopper (3) is fitted with a suitable discharging device (6), screw or conveyor belt, that feeds the mixer (7). Said mixer (7) consists of an essentially cylindrical and horizontal equipment provided with a rotor shaft fitted with ploughshares or two rotating shafts carrying vanes (reels), optionally with the addition of blades; the characteristic of said mixer (7) is a high mixing efficiency of the solid and liquid materials fed into the same, at different times and from different points of the plant: the materials thus turn out to be intimately mixed with each other, which greatly favours the progress of the reactions that are gradually involved, all the way up to the formation of the desired Defecation Gypsum.

In a first time, the mixer (7), loaded with the organic, solid and, in a small amount, liquid, material from the hopper (3), optionally internally provided, in order to improve the mixing of the various components, with some suitable premixing screws or clod breakers, and simultaneously with a calcium chemical selected from calcium oxide and calcium hydroxide, the calcium oxide supplied from the silos (8), fitted with a loading cell, or, preferably, the calcium hydroxide supplied from the dissolving tank (27) and a system for transmitting the weights to a PLC or PC, by means of the screw (9), or the pump (28), starts the alkaline hydrolysis of the mostly protein-based products contained in the mixture formed by the biological sludges and other wastes, then said hydrolysis reaction is completed by discharging the mixture, by means of the conveyor belt (10), onto a suitable pad fitted with an impermeable pavement, where the heap is allowed to rest for a period of about 12 hours. Said retention time allows a controlled completion of the hydrolysis reaction and prevents the temperature of the material, due to the chemical reactions involved, from reaching levels which could excessively degrade the organic matter, thus also destroying the amino-acids formed. Said result is assured by monitoring the temperature and resorting, if necessary, to some turning over movements that induce a cooling of the material.

In the case of using calcium hydroxide, this is formed in the tank (27) of the plant, by mixing therein calcium oxide with water.

In a second time, in order to perform the neutralization stage with sulphuric acid and consequent precipitating the calcium sulphate dihydrate, the product discharged from the mixer (7) to the pad by means of the conveyor belt (10) is again picked up, after the mentioned retention time, by the mechanical shovel (11), which may be the same shovel (2) or, as above mentioned, another similar shovel. The discharged product is then conveyed again to the hopper (3) (shovel (11), path (25)), with the addition of other wastes and chemicals, if any, and conveyed from there, by means of the conveyor belt or the screw (6), to the mixer (7) together with the sulphuric acid that is sprayed on by means of the spray nozzle (14) and comes, by means of the pump (12), from the storage tank (13) that is likewise equipped with a loading cell. The product is discharged from the mixer (7) to the conveyor belt (10) so as to form a heap wherein the precipitation of the calcium sulphate dihydrate occurs, which uniformly incorporate the fine particles of organic matter of a high agronomic quality, thus constituting the finial product, a Defecation Gypsum, with the desired formulation.

The product is picked up again by the mechanical shovel (11) or, as mentioned above, by another similar shovel and delivered to the storehouse (15) (path (26)).

The plant also comprises two vapour and droplet separators (scrubbers), one working with an acid solution and the other with an alkaline solution, so as to absorb the vapours that are evolving from the mixer in the two successive hydrolysis and precipitation treating stages, sucked, together with air, through the appropriated hood (16) and aspirator (17) and passed through the scrubbers (18) and (19) where the vapours are knocked down. The air exiting from the scrubbers is purified and recycled through an appropriate conduit to a suitable area of the mixer, so as to enhance the efficiency of the conveying the new vapours formed during the reactions in the new steps to the scrubbers (18) and (19).

The vapours are washed in the scrubbers (18) and (19), respectively, with an acid solution (mixer (7) operating for the hydrolysis with calcium oxide or, preferably, with calcium hydroxide) and with a basic solution (mixer (7) operating for the precipitation with sulphuric acid): the two solutions are circulated by the pumps (20) and (21), which convey, respectively, the solutions to the upper part of the scrubbers (18) and (19), where they are appropriately distributed by means of the spray nozzles (22) and (23).

When the washing solutions are too concentrated, they are discharged into the mixer (7), while introducing fresh makeup solutions (the makeup flows are not shown in Figure 1).

Due to the aspirator (17), the air happens to be moving in a closed circuit (comprising the mixer (7), aspirator (17), scrubber (18), scrubber (19) and mixer (7)), except for some venting vapours (not shown in Figure 1) that are, together with the vapours flowing from the hopper (3), flowing to the bio-filter (24) as vapours coming from the shed that houses the hopper (3), the mixer (7) and, partially, the conveyor belt (10).

In the case the Defecation Gypsum producing plant of the present invention is equipped with two mixers (7) instead of only one, the detailed description is essentially not much changed, the same is therefore not illustrated here.

The mixers (7) can be even more than two when, due to the plant capacity, it is necessary to install some of them in parallel.

As already shown for the mechanical shovels, the silos and storage tanks are also equipped with suitable weighing devices and electronic devices which are to take care of weighing and dosing the various components as well as of recording the data, so as to prevent dosing errors while also allowing to trace the involved various production lots.

The PLC or PC installed in the plant is fitted with a software for regulating the various operating parameters, in particular the flow rate ratios of the various reagents, while acting on the driving motors of the various handling devices as well as on the mixer motor (7).

The PLC or PC also takes care of the starting-up and shutting-down of the motors of the various handling devices such as the conveyor belts, the screws and, in particular, the sulphuric acid pump.

The Defecation Gypsum production plant, object of the present invention, may be stationary, meaning realized on concrete structures with immovable fixtures and piping, or be mobile, mounted on a skid of 2.50 x 10 or 12 m, so as to be transportable on ordinary vehicles with rubber wheels, without the need to recur to exceptional transports.

In the case of a mobile plant, the pads are replaced by unloadable caissons that are partially filled so as to facilitate the handling of the materials by transferring them from one caisson to another, and the necessary covers are realized with tensile structures.

## Claims

1. A batch-type or continuous, stationary or mobile plant for the preparation of Defecation Gypsum for agricultural use and formulations containing the same, starting from solid and liquid organic materials of a prevalently protein-based nature, **characterized by** the fact that it is made of one or more mixers (7), having a high mixing efficiency, which are fed with the solid and liquid organic material from the hopper (3), provided with some premixing devices, by means of the suitable discharging device (6), where said hopper (3) is in turn fed from the heap of the raw materials by means of the mechanical shovel (2), fitted with weighing devices and capable of transmitting operating data to a system selected from a PLC and a PC, said mixers (7) being simultaneously fed with a calcium chemical selected from calcium oxide and calcium hydroxide, being the calcium oxide supplied, by means of the screw (9), from the silos (8) which is also fitted with a loading device and means of transmitting the weight data to a system selected from a PLC and a PC and being the calcium hydroxide supplied by means of the pump (28), from the dissolving tank (27), the calcium oxide, being supplied, and measured, from the silos (8) to the dissolving tank (27) together with a suitable, and measured, quantity of water; and of a suitable collecting space wherein the resulting material mixture from the mixer (7), is conveyed by means of the conveyor belt (10), from which the material mixture, by means of the shovel (11), is transferred to the hopper (3) and from the latter, by means of the discharging device (6), into the mixers (7) which simultaneously receive the sulphuric acid from the storage tank (13) through the pump (12) and the spray nozzle (14), and where the resulting product, by means of the conveyor belt (10), is discharged onto a suitable collecting place until the desired product is obtained, while suitable additives and chemical substances supplied from boxes (4) and large size storage bags (5) are optionally added to the hopper (3) transferring them with a mechanical shovel, and overhead rail, respectively, and the mixers (7) are fitted with the sucking hood (16) and with the aspirator (17) connected with two scrubbers (18) and (19), being said scrubbers equipped with the recycling pumps (20) and (21), and being the mentioned system selected from a PLC and a PC furnished with a specific software for an automatic regulation of the plant.

2. A batch-type or continuous, stationary or mobile plant for the preparation of Defecation Gypsum for agricultural use and formulations containing the same, starting from solid and liquid organic materials of a prevalently protein-based nature, **characterized by** the fact that it is constituted of two mixers (7) having a high mixing efficiency, which are fed with the solid and liquid organic material from a hopper (3), provided with some premixing devices, by means of the suitable discharing device (6), where said hopper (3) is in turn fed from the heap of the starting products by means of the mechanical shovel (2), fitted with weighing devices and capable of transmitting operating data to a system selected from a PLC and a PC, the first of said mixers (7), being simultaneously fed with calcium hydroxide, being the same supplied by means of the pump (28), from the dissolving tank (27), the calcium oxide being supplied, by means of the screw (9) to said dissolving tank (27) and measured, from the silos (8), which is also fitted with a loading device and means of transmitting the weight data to a system selected from a PLC and a PC,' together with a suitable, and measured, quantity of water; and of a suitable collecting space wherein the resulting material mixture from the first mixer (7), is conveyed by means of the conveyor belt (10), from which the material mixture, by means of the shovel (11), is transferred to the hopper (3) and from the latter, by means of the discharging device (6), into the second of said mixers (7) which simultaneously receive the sulphuric acid from the storage tank (13) through the pump (12) and the spray nozzle (14), and where the resulting product, by means of the conveyor belt (10), is discharged onto a suitable collecting place until the desired product is obtained, while suitable additives and chemical substances coming from the boxes (4) and large size storage bags (5) are optionally added to the hopper (3) transferring them with a mechanical shovel and overhead rail, respectively, and the mixers (7) are fitted with the sucking hood (16) and with the aspirator (17) connected with two scrubbers (18) and (19), being said scrubbers equipped with the recycling pumps (20) and (21), and being the mentioned system selected from a PLC and a PC furnished with a specific software for an automatic regulation of the plant.

3. A batch-type or continuous, stationary or mobile plant for the preparation of Defecation Gypsum for agricultural use and formulations containing the same, starting from solid and liquid organic materials of a prevalently protein-based nature, according to claim 1 or 2, **characterized by** the fact that the mixers (7), having a high mixing efficiency, are of a type equipped with a shaft fitted with ploughshares.

4. A batch-type or continuous, stationary or mobile plant for the preparation of Defecation Gypsum for agricultural use and formulations containing the same, starting from solid and liquid organic materials of a prevalently protein-based nature according to claim 1 or 2, **characterized by** the fact that the mixers (7), having a high mixing efficiency, are of a type equipped with shafts fitted with vanes (reels).

5. A batch-type or continuous, stationary or mobile plant for the preparation of Defecation Gypsum for agricultural use and formulations containing the same, starting from solid and liquid organic materials of a prevalently protein-based nature according to any of the previous claims, **characterized by** the fact that the discharging device (6) of the hopper (3) is constituted of a screw.

6. A batch-type or continuous, stationary or mobile plant for the preparation of Defecation Gypsum for agricultural use and formulations containing the same, starting from solid and liquid organic materials of a prevalently protein-based nature according to any of the previous claims from 1 to 4, **characterized by** the fact that the discharging device (6) of the hopper (3) is constituted of a conveyor belt.

7. A batch-type or continuous, stationary or mobile plant for the preparation of Defecation Gypsum for agricultural use and formulations containing the same, starting from solid and liquid organic materials of a prevalently protein-based nature according to any of the previous claims, **characterized by** the fact that the hopper (3) is provided with premixing screws.

8. A batch-type or continuous, stationary or mobile plant for the preparation of Defecation Gypsum for agricultural use and formulations containing the same, starting from solid and liquid organic materials of a prevalently protein-based nature according to any of the previous claims from 1 to 6, **characterized by** the fact that the hopper (3) is provided with premixing clod brakers.

9. A batch-type or continuous, stationary or mobile plant for the preparation of Defecation Gypsum for agricultural purposes and formulations containing the same, starting from solid and liquid organic materials of a prevalently protein-based nature according to any of the previous claims from 1 to 8, **characterized by** the fact that the shovels (2) and (11) are provided with rubber wheels.

10. A batch-type or continuous, stationary or mobile plant for the preparation of Defecation Gypsum for agricultural use and formulations containing the same, starting from solid and liquid organic materials of a prevalently protein-based nature according to any of the previous claims, **characterized by** the fact that each collecting space for the materials is constituted of pads with impermeable pavements and means for collecting a percolate, if any.

11. A batch-type or continuous, stationary or mobile plant for the preparation of Defecation Gypsum for agricultural use and formulations containing the same, starting from solid and liquid organic materials of a prevalently protein-based nature according to any of the previous claims from 1 to 9, **characterized by** the fact that each collecting space for the materials is constituted of carriageable caissons.
